# EUROPÄISCHE PATENTSCHRIFT

(11) **EP 3 530 971 B1**
(45) Veröffentlichungstag und Bekanntmachung des Hinweises auf die Patenterteilung: **06.07.2022**
(21) Anmeldenummer: 19000071.1
(22) Anmeldetag: 07.02.2019
(51) Int. Cl.: F16D 1/00, B02C 13/22, F16D 1/08

(54) **VORRICHTUNG ZUM LÖSBAREN VERBINDEN EINES ROTORS EINER MASCHINE MIT EINER WELLE**
DEVICE FOR THE REVERSIBLE CONNECTION OF A ROTOR OF A MACHINE TO A SHAFT
DISPOSITIF DE RACCORDEMENT LIBÉRABLE D'UN ROTOR D'UNE MACHINE DOTÉE D'UN ARBRE

(30) Priorität: 08.02.2018 DE 102018001012
(43) Veröffentlichungstag der Anmeldung: 28.08.2019
(73) Patentinhaber: HOSOKAWA ALPINE Aktiengesellschaft, 86199 Augsburg (DE)
(72) Erfinder: KIRCHENBAUR, Christian, 86399 Bobingen (DE); ZELLER, Martin, 89347 Bubesheim (DE); LIGOTKY, Markus, 86159 Augsburg (DE); BORN, Olaf, 86486 Bonstetten (DE)

(56) Entgegenhaltungen:
- DE-A1- 4 312 207
- DE-A1-102005 061 085
- DE-A1-102010 064 215

## Beschreibung

Die Erfindung betrifft eine Vorrichtung zum lösbaren Verbinden eines Rotors einer Maschine mit einer Welle.

Rotoren von verfahrenstechnischen Maschinen, wie beispielsweise Zerkleinerungsmaschinen und Windsichter, werden über Passfederverbindungen, Spannsatzverbindungen oder Kegelsitze miteinander verbunden. Sie dienen als lösbare Verbindungen und der Drehmomentenübertragung von der Welle auf den Rotor.

Bei schnelllaufenden Maschinen ist der Einsatz von Passfederverbindungen aufgrund ihres großen Passungsspiels nicht geeignet. Der Rotor wird zudem mit einer Schraubenverbindung verschraubt. Diese Schraubenverbindung muss mit dem entsprechenden Anzugsmoment angezogen werden, damit sie sich nicht löst. Um dieses Anzugsmoment aufbringen zu können, muss entsprechend gegengehalten werden. Dies erfordert immer aufwendige Gegenhalteeinrichtungen.

Auch bei Kegelsitzverbindungen ist zum Anziehen der Schraubenverbindung eine Gegenhaltevorrichtung erforderlich. Bei Demontage muss nach dem Lösen der Schraubenverbindung zusätzlich der Kegelpressverband mit Hilfe einer Vorrichtung auseinander gepresst werden.

Bei den bekannten Spannsätzen wird der Spannsatz auf die Welle montiert und die Nabe des Rotors sitzt auf dem Spannsatz und beide Bauteile werden miteinander verspannt. Dies lässt sich nur bei großen Nabendurchmessern mit entsprechender Nabendicke realisieren

Eine derartige Vorrichtung ist aus DE102010064215 bekannt. Aufgabe der Erfindung ist es eine Vorrichtung zur lösbaren Verbindung von Rotor und Welle zur Verfügung zu stellen, die ein schnelles und einfaches Montieren und Demontieren eines Rotors auf eine Welle ermöglicht.

Die Aufgabe wird durch eine Vorrichtung gemäß dem Anspruch 1 gelöst.

Bei der erfindungsgemäßen Vorrichtung zur lösbaren Verbindung eines Rotors einer Maschine mit einer Welle mittels Spannsatz wird der Spannsatz zu einem Teil von der Welle und zum anderen Teil vom Rotor aufgenommen. Dafür ist die Welle auf ihrer dem Rotor zugewandten Seite mit einer zylindrischen Ausnehmung ausgebildet in die der Spannsatz eingesetzt wird. Auf die andere Seite des Spannsatzes wird der Rotor über seine Nabe aufgeschoben. Der Spannsatz wird über eine Spannmutter vom Arbeitsraum der verfahrenstechnischen Maschine von der wellenabgewandten Seite des Rotors verspannt. Der Spannsatz wird vollständig von Welle und Rotor umgeben. Idealerweise wird der Spannsatz je zur Hälfte von der Welle und dem Rotor aufgenommen.

Der Spannsatz wird mit leichter Übergangpassung in die Welle geschrumpft, während der Rotor ein leichtes Spiel auf dem Spannsatz hat. Durch Anziehen des Spannsatzes wird der Spannsatz in der Welle und dem Werkzeug fixiert.

Wird der Spannsatz gelöst, gibt er den Rotor frei, sodass dieser von der Welle abgenommen und ausgetauscht werden kann. Der Spannsatz selber verbleibt aufgrund seines leichten Übermaßes in der Welle. Ist ein Austausch des Spannsatzes notwendig wird er aus der Welle gelöst und ausgetauscht.

Als Spannsatz kommen hydraulische Spannsätze zum Einsatz. Diese zeichnen sich durch eine geringe Einbaugröße mit hoher Kraftübertragung aus.

Anwendung findet diese Art der lösbaren Verbindung von Rotor und Welle beispielsweise in verfahrenstechnischen Maschinen wie Zerkleinerungsmaschinen, Windsichter oder Mischer. Die Erfindung ist nicht auf diese Anwendungsbeispiele beschränkt.

Eine solche lösbare Verbindung von Welle und Rotor kennzeichnet sich neben einem leichten und schnellen Ein- und Ausbaus des Rotors durch seine geringen Anzieh- und Lösedrehmomente an einer Schraube aus.

Der Einsatz von Abziehvorrichtungen die bei Kegelsitz-Verbindungen notwendig sind, entfallen hier. Dies macht die Verbindung interessant für den Einsatz von verfahrenstechnischen Maschinen in Isolatorsystemen für pharmazeutische Anwendungen, da hier einfach zu bedienende Vorrichtungen Voraussetzung sind. Zum Ein- und Ausbau von Rotoren ist hier nur ein Werkzeug notwendig, welches mit geringem Kraftaufwand zu bedienen ist, sodass der Ausbau oder Austausch des Rotors auch unter erschwerten Bedingungen, wie sie in einem Isolator herrschen, einfach und leicht durchzuführen ist.

Der Spannsatz sitzt je zur Hälfte in der Welle und im Rotor und ist von diesen vollständig umgeben, gleichzeitig sitzen Rotor und Welle auf Stoß sodass sich keine Störkanten im Produktstrom befinden, was zu geringen Produktrückständen im Arbeitsraum der Maschine führt und Voraussetzung für eine leichte und gute Reinigbarkeit der Maschine ist, speziell beim Einsatz in Isolatoren.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der -beispielhaft- ein bevorzugtes Ausführungsbeispiel der Erfindung dargestellt ist.

In der Zeichnung zeigt:

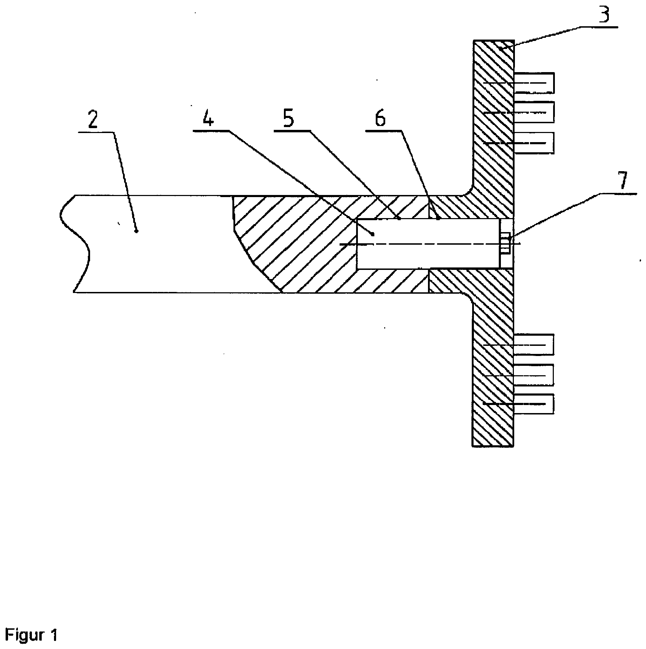

Fig. 1: Ansicht einer erfindungsgemäßen Vorrichtung zum lösbaren Verbinden eines Rotors mit einer Welle für eine Stiftmühle.

Die Figur 1 zeigt eine Welle und einen Rotor einer Stiftmühle mit einer erfindungsgemäßen lösbaren Verbindung, welche eine Welle 2 mit einem Rotor 3 mittels hydraulischen Spannsatzes 4 verbindet. Die Welle 2 weißt an ihrem dem Rotor 3 zugewandten Seite eine zylindrische Ausnehmung 5 auf. In dieser Ausnehmung 5 wird der Spannsatz 4 eingesetzt. Der Spannsatz 4 wird ca. zur Hälfte in der Ausnehmung 5 der Welle 2 aufgenommen. Die andere Seite des Spannsatzes 4 die aus der Welle 2 ragt nimmt den Rotor 3 an seiner Nabe 6 auf. Der Rotor 3 wird auf den Spannsatz 4 geschoben sodass die Welle 2 und der Rotor 3 auf Stoß sitzen. Durch Drehen der Spannschaube 7 wird der Spannsatz 4 auf der einen Seite mit der Welle 2 verspannt und auf der anderen Seite mit dem Rotor 4.

### Bezugszeichen

- 2: Welle
- 3: Rotor
- 4: Spannsatz
- 5: Ausnehmung
- 6: Nabe
- 7: Spannschraube

## Patentansprüche

1. Vorrichtung umfassend einen Rotor (3) und eine Welle (2) einer Maschine, einen Spannsatz zum lösbaren Verbinden des Rotors (3) mit der Welle (2) wobei der Spannsatz (4) ein hydraulischer Spannsatz ist, der über sein erstes Ende eine achsgleiche Verbindung zum Rotor (3) herstellt und über sein zweites Ende eine achsgleiche Verbindung zur Welle (2) herstellt, wobei die Welle (2) auf ihrer dem Rotor (3) zugewandten Seite eine zylindrische Ausnehmung zu Aufnahme des Spannsatzes aufweist und der Rotor (3) auf seiner der Welle (2) zugewandten Seite über seine Nabe (6) auf den Spannsatz (4) gesteckt wird wobei der Spannsatz (4) wellenseitig eine Übergangspassung besitzt und durch schrumpfen befestigt ist.

2. Vorrichtung nach Anspruch 1 wobei der Spannsatz (4) je zur Hälfte in der Welle (2) und im Rotor (3) sitzt.

3. Vorrichtung nach Anspruch 1 und 2 wobei der
Spannsatz (4) über eine Schaube (7) auf der wellenabgewandten Seite des Rotors (3) verspannt wird.

4. Vorrichtung nach Anspruch 1 bis 3 wobei die Welle
(2) und der Rotor (3) in Achsrichtung auf Stoß sitzen und den Spannsatz (4) vollständig umgeben.

5. Vorrichtung nach Anspruch 1 wobei der Spannsatz
(4) rotorseitig Spiel besitzt.

6. Vorrichtung nach einem oder mehreren der vorangegangenen Ansprüche wobei
durch lösen des Spannsatzes (4) nur der Rotor (3) freigegeben wird und der Spannsatz (4) in der Welle (3) verbleibt.

7. Vorrichtung nach einem oder mehreren der vorangegangenen Ansprüche wobei
die Maschine eine verfahrenstechnische Maschine vorzugsweise eine Zerkleinerungsmaschine, ein Windsichter oder ein Mischer ist.

## Claims

1. Device comprising a rotor (3) and a shaft (2) of a machine, as well as a tension bushing to connect the rotor (3) to the shaft (2) in a separable manner, **whereby**
the tension bushing (4) is a hydraulic tension bushing which at one end, effects an axis-aligned connection to the rotor (3) and at the other end, an axis-aligned connection to the shaft (2), whereby the shaft (2) has a cylindrical recess to accommodate the tension bushing on the side facing the rotor (3) and the rotor (3) is connected to the tension bushing (4) on the side facing the shaft (2) via its hub (6), whereby the tension bushing is equipped with a transition tolerance and is fixed in place by means of shrink-fitting.

2. Device in accordance with Claim 1, **whereby**
one half of the tension bushing (4) is located in the shaft (2) and the other half in the rotor (3).

3. Device in accordance with Claim 1 and 2, **whereby**
the tension bushing (4) is tensioned by means of a screw (7) on the side of the rotor (3) that faces away from the shaft.

4. Device in accordance with Claim 1 to 3, **whereby**
the shaft (2) and the rotor (3) abut each other in axial direction and completely surround the tension bushing (4).

5. Device in accordance with Claim 1, **whereby**
the tension bushing (4) has a certain clearance on the rotor side.

6. Device in accordance with one or more of the previous claims, **whereby** releasing the tension bushing (4) causes only the rotor (3) to detach and the tension bushing (4) remains in the shaft.

7. Device in accordance with one or more of the previous claims, **whereby** the machine is a process-technological machine, preferably a comminution machine, an air classifier or a mixer.

## Revendications

1. Dispositif comprenant un rotor (3) et un arbre (2) d'une machine, un jeu de serrage pour assemblage amovible du rotor (3) à l'arbre (2) **dans lequel**
le jeu de serrage (4) est un jeu de serrage hydraulique qui établit par sa première extrémité une liaison coaxiale avec le rotor (3) et par sa deuxième extrémité une liaison coaxiale avec l'arbre (2), l'arbre (2) présentant sur son extrémité tournée vers le rotor (3) un évidement cylindrique pour recevoir le jeu de serrage et le rotor (3) étant enfiché sur son côté tourné vers l'arbre (2) par l'intermédiaire de son moyeu (6) sur le jeu de serrage (4), le jeu de serrage (4) possédant du côté de l'arbre un ajustement de transition et étant fixé par frettage.

2. Dispositif selon la revendication 1 **dans lequel**
le jeu de serrage (4) est placé pour moitié dans l'arbre (2) et pour moitié dans le rotor (3).

3. Dispositif selon les revendications 1 et 2 **dans lequel**
le jeu de serrage (4) est serré par un boulon (7) sur le côté du rotor (3) opposé à l'arbre.

4. Dispositif selon les revendications 1 à 3 **dans lequel**
l'arbre (2) et le rotor (3) sont placés bout à bout dans le sens de l'axe et entourent complètement le jeu de serrage (4).

5. Dispositif selon la revendication 1 **dans lequel**
le jeu de serrage (4) présente un jeu côté rotor.

6. Dispositif selon une ou plusieurs des revendications précédentes **dans lequel** en desserrant le jeu de serrage (4), seul le rotor (3) est libéré, le jeu de serrage (4) restant dans l'arbre (3).

7. Dispositif selon une ou plusieurs des revendications précédentes dans lequel la machine est une machine de procédé technologique, de préférence une machine de broyage, un sélecteur pneumatique ou un agitateur.
